# EUROPEAN PATENT APPLICATION

(11) **EP 2 573 710 A1**
(43) Date of publication of application: **27.03.2013**
(21) Application number: 12183083.0
(22) Date of filing: 05.09.2012
(51) Int. Cl.: G06K 9/00, H04M 1/18, H04M 1/02, H05K 5/06

(54) **Water-tight and dust-tight mounting of a fingerprint sensor in a mobile phone**

(30) Priority: 22.09.2011 JP 2011207966
(71) Applicant: FUJITSU LIMITED, Kawasaki-shi, Kanagawa 211-8588 (JP)
(72) Inventor: Tada, Kazuhiro, Kawasaki-shi, Kanagawa 211-8588 (JP); Sakashita, Hiroaki, Kawasaki-shi, Kanagawa 211-8588 (JP); Araki, Tatsuhito, Kawasaki-shi, Kanagawa 211-8588 (JP)
(74) Representative: Holz, Ulrike

(57) **Abstract**

An electronic equipment includes a housing in which an opening is formed, an electronic device unit in which an electronic device is provided at the opening of the housing, a device holder which is provided with a first sealing member around a periphery of the device holder, the device holder being provided in the housing or in a fixing unit fixed to the housing via the first sealing member, a second sealing member which is provided between the electronic device unit and the device holder and is provided to surround an interconnecting opening formed in the device holder, and a conductive member which is connected to other components from the electronic device unit through the interconnecting opening to enable transmitting or receiving of an electrical signal between the electronic device and other components.

## Description

### FIELD

The embodiment disclosed herein is related to an electronic equipment.

### BACKGROUND

Recently electronic equipment such as a mobile phone is provided with an electronic device that is disposed at an opening of a housing of the electronic equipment and is exposed to the outside. An example of the electronic device is a fingerprint sensor. In electronic equipment on which such an electronic device is mounted, water-tightness and dust-tightness against liquid, dust or other foreign material entering through a gap between the housing and the electronic device are important.

A general conventional water-tight/dust-tight structure achieves water-tightness and dust-tightness at a gap between components by making the components be in close contact with each other using an O-ring or a water-tight/dust-tight double-sided tape. The O-ring is a ring-shaped elastic member, such as rubber. The water-tight/dust-tight double-sided tape is a plate-shaped elastic member having an adhesive applied to both sides thereof.

However, it is not considered in the conventional structure to achieve water-tightness and dust-tightness and, at same time, reduction in size and thickness of the electronic equipment in which the electronic device is mounted at the opening of the housing.

For example, a case in which an electronic device is provided at an opening of the housing and a device holder which supports the electronic device is provided inside the housing will be considered. In this case, a space inside the housing may be divided into a space on the side of the opening and a space on the side opposite to the opening by fixing the device holder to the inside of the housing via an O-ring. With this configuration, water from outside may enter the side of the opening and not enter the side opposite to the opening.

An exemplary methods for transmitting electrical signals output from the electronic device to the space on the side opposite to the opening includes extending a conductive member, such as a flexible cable, from the electronic device to the space on the side opposite to the opening. However, since the space on the side of the opening in which the electronic device is provided and the space on the side opposite to the opening are divided, an interconnecting opening which makes the space on the side of the opening and the space on the side opposite to the opening communicate with each other is formed in the device holder and the conductive member is extended from the electronic device to the space on the side opposite to the opening via the interconnecting opening.

In this case, water-tightness and dust-tightness at the interconnecting opening of the device holder are desirable. An exemplary method for achieving the water-tightness and dust-tightness includes making a grommet which surrounds a periphery of an extended portion of a conductive member be integrally attached to the conductive member and making an outer peripheral surface of the grommet and an inner surface of the interconnecting opening of the device holder be in close contact with each other using an O-ring.

However, such a water-tight/dust-tight structure has a limit in reduction in size of the grommet since the grommet is fabricated by molding and it is desired to keep a space in which the O-ring is disposed. Therefore, such a water-tight/dust-tight structure may have limit in reduction in size and in thickness of the electronic equipment.

Japanese Laid-open Patent Publication No. 2008-52606 is an example of the related art.

### SUMMARY

Accordingly, it is desirable in one aspect of the embodiments to realize miniaturization and waterproof/dust-proofing in the housing of the electronic equipment.

According to an aspect of the invention, an electronic equipment includes a housing in which an opening is formed, an electronic device unit in which an electronic device is provided at the opening of the housing, a device holder which is provided with a first sealing member around a periphery of the device holder, the device holder being provided in the housing or in a fixing unit fixed to the housing via the first sealing member, a second sealing member which is provided between the electronic device unit and the device holder and is provided to surround an interconnecting opening formed in the device holder, and a conductive member which is connected to other components from the electronic device unit through the interconnecting opening to enable transmitting or receiving of an electrical signal between the electronic device and other components.

### BRIEF DESCRIPTION OF DRAWINGS

In the following, exemplary description of embodiments is provided, wherein

FIG. 1A is an exterior perspective view of a front side of a mobile phone;

FIG. 1B is an exterior perspective view of a back side of the mobile phone;

FIG. 2 is an exploded perspective view of the mobile phone;

FIG. 3 is an exploded perspective view of a fingerprint sensor module;

FIG. 4A is a rear view of the mobile phone;

FIG. 4B is an IVB-IVB sectional view of the mobile phone illustrated in FIG. 4A;

FIG. 5A is a rear view of a mobile phone for the comparison; and

FIG. 5B is a VB-VB sectional view of the mobile phone illustrated in FIG. 5A.

### DESCRIPTION OF EMBODIMENTS

Hereinafter, an embodiment of electronic equipment disclosed by the present application will be described in detail with reference to the drawings. The disclosed technique is not limited by this embodiment. In the following embodiment, a mobile phone will be described as an example of the electronic equipment. However, the embodiment may be applied also to other electronic equipment in which an electronic device is provided at an opening of a housing, such as a smart-phone, a personal computer (PC) or a personal digital assistant (PDA). In the following embodiment, a fingerprint sensor will be described as an example of the electronic device of the mobile phone: however, the present embodiment is not limited to the same and may be applied also to a water-tight/dust-tight structure of the electronic equipment in which the electronic device is provided at the opening of the housing.

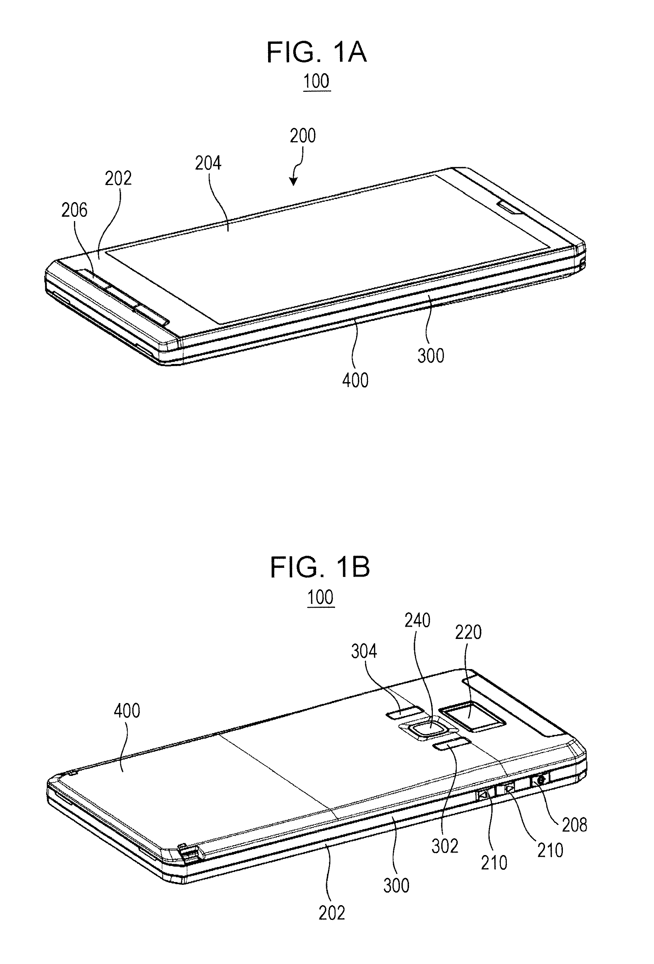

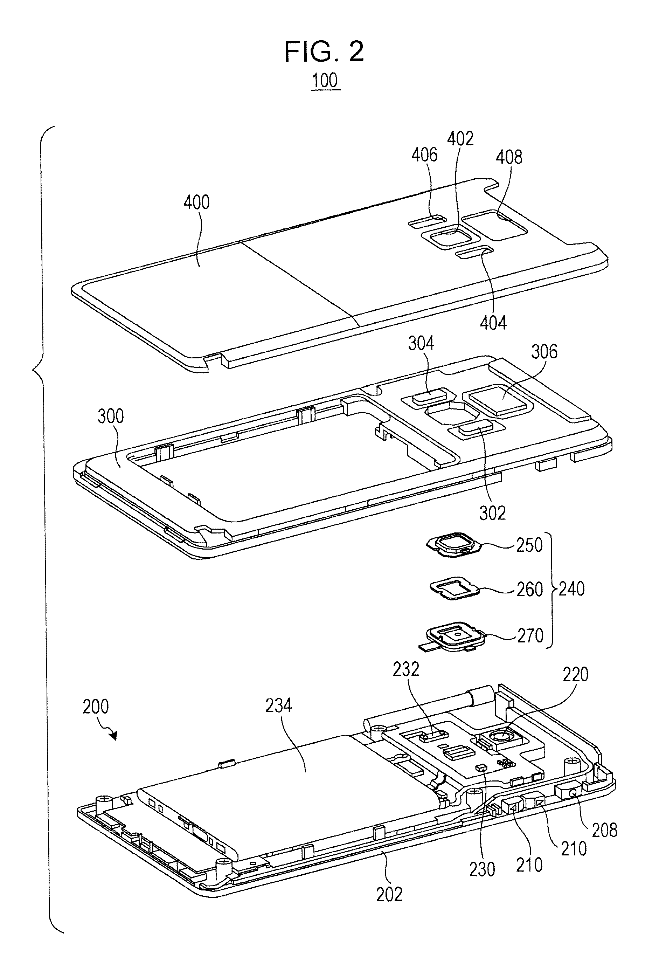

FIG. 1A is an exterior perspective view of a front side of a mobile phone. FIG. 1B is an exterior perspective view of a back side of the mobile phone. FIG. 2 is an exploded perspective view of the mobile phone.

As illustrated in FIGs. 1A, 1B and 2, the mobile phone 100 is provided with a front module 200, a rear case 300 and a rear cover 400. Various components are mounted on the front module 200. The rear case 300 is deposited as a layer on the front module 200. The rear cover 400 is deposited as a layer on the rear case 300.

The front module 200 is provided with a front case 202, a display 204 and various operation keys 206. The display 204, such as a liquid crystal panel, is provided at an opening formed in the front case 202. The operation keys 206 are provided at a lower end of the front case 202. The front module 200 is provided with a power key 208 exposed to a side surface of the rear case 300, and an up/down key 210 exposed to a side surface of the rear case 300. The power key 208 is used to turn on and off the mobile phone 100. The up/down key 210 is used, for example, to increase or decrease the receiver volume of the mobile phone 100. The front module 200 is provided at an opening 402 formed in the rear cover 400. The front module 200 is provided with a fingerprint sensor module 240 and a camera module 220. The fingerprint sensor module 240 is exposed to the outside so that a user may touch the same. The camera module 220 is provided at an opening 408 formed in the rear cover 400 and is exposed to the outside.

The fingerprint sensor module 240 is provided with a sensor unit 250, a water-tight/dust-tight double-sided tape 260 and a sensor holder portion 270 which are disposed in layers sequentially from the opening 402 side of the rear cover 400. Details of the fingerprint sensor module 240 will be described later. The front module 200 is provided with a battery 234 mounted in the front case 202. The front module 200 is further provided with a light emitting diode (LED) 230 and an infrared transmitter/receiver 232. The LED 230 is provided adjacent to the fingerprint sensor module 240. The infrared transmitter/receiver is provided adjacent to the fingerprint sensor module 240 on the side opposite to the side on which the LED 230 is provided.

The rear case 300 covers the LED 230 mounted on the front module 200. The rear case 300 is provided with a flash lens 302 exposed from an opening 404 formed in the rear cover 400. The rear case 300 covers an infrared transmitter/receiver 232 mounted on the front module 200. The rear case 300 is provided with an IrDA panel 304 exposed from an opening 406 formed in the rear cover 400. The rear case 300 covers a camera module 220 mounted on the front module 200. The rear case 300 is provided with a camera cover 306 exposed from an opening 408 formed in the rear cover 400.

The flash lens 302 is a transparent or semitransparent cover which protects the LED 230 mounted on the front module 200 and transmits light emitted from the LED 230 to the outside. The IrDA panel 304 is a cover which protects the infrared transmitter/receiver 232 mounted on the front module 200 and carries out infrared ray communication between the infrared transmitter/receiver 232 and an infrared transmitter/receiver of an external device. The camera cover 306 protects the camera module 220 mounted on the front module 200.

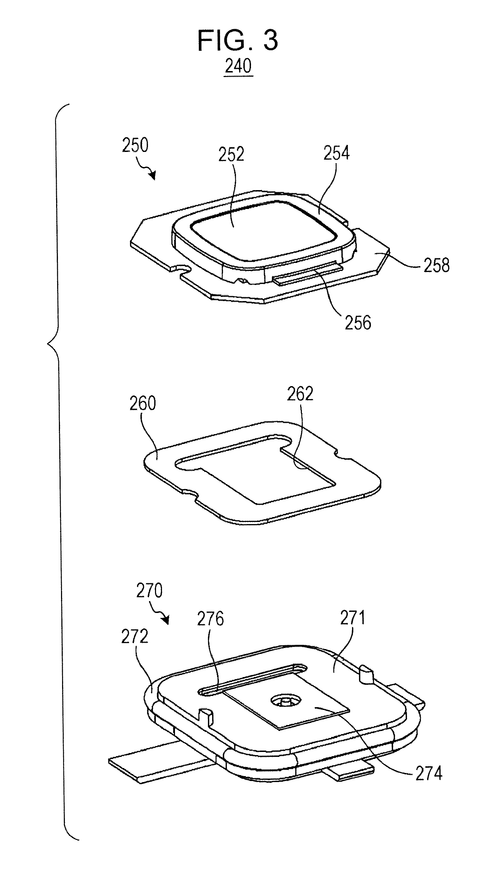

Next, details of the fingerprint sensor module 240 will be described. FIG. 3 is an exploded perspective view of a fingerprint sensor module. As illustrated in FIG. 3, the fingerprint sensor module 240 is provided with a sensor unit 250, the water-tight/dust-tight double-sided tape 260 and the sensor holder portion 270 which are deposited as layers.

The sensor unit 250 is provided with a printed circuit board for sensor 258 on which a wiring pattern for the transmission of electrical signals transmitted and received between the sensor unit 250 and other components is formed. The sensor unit 250 is provided with a fingerprint sensor device 252 and a molded portion 254. The fingerprint sensor device 252 is mounted on the printed circuit board for sensor 258 and outputs electrical signals in accordance with protrusions and indentations of the user's finger. The molded portion 254 covers the outer periphery of the fingerprint sensor device 252 and fixes the fingerprint sensor device 252 to the printed circuit board for sensor 258. The sensor unit 250 is further provided with a terminal 256. One end of the terminal 256 is connected to the fingerprint sensor device 252: the other end of the terminal 256 is exposed from an end of the molded portion 254 and is connected to an electrode formed on the printed circuit board for sensor 258.

The electrical signals used for the detection of a user's fingerprint are transmitted to the fingerprint sensor device 252 from the printed circuit board for sensor 258 via the terminal 256. A through hole is formed in the printed circuit board for sensor 258 at a portion at which the fingerprint sensor device 252 is mounted. The through hole electrically connects a front surface and a back surface of the printed circuit board for sensor 258. The electrical signals in accordance with the protrusions and indentations of the user's finger detected by the fingerprint sensor device 252 are transmitted to the back surface side via the through hole of the printed circuit board for sensor 258.

The water-tight/dust-tight double-sided tape 260 is a water-tight and dust-tight elastic film member formed in a frame shape. The water-tight/dust-tight double-sided tape 260 is adhesive on both sides of the film. From another point of view, the water-tight/dust-tight double-sided tape 260 includes an opening 262 formed in a water-tight and dust-tight elastic film member and is adhesive on both sides of the film.

The sensor holder portion 270 supports the sensor unit 250 and the water-tight/dust-tight double-sided tape 260 in the housing constituted by the front case 202, the rear case 300 and the rear cover 400 of the mobile phone 100. The sensor holder portion 270 is provided with a sensor holder 271 and an O-ring 272. The sensor holder 271 has a contact surface on which the sensor holder 271 and the back surface of the water-tight/dust-tight double-sided tape 260 are in contact with each other. The O-ring 272 covers an outer periphery of the sensor holder 271 and is formed by ring-shaped elastic member. The sensor holder 271 divides a space inside the housing of the mobile phone 100 into a space on the side of the opening and a space on the side opposite to the opening using the elasticity of the O-ring 272. The sensor unit 250 is exposed to the outside through the space on the side of the opening. An interconnecting opening 276 which makes the space on the side of the opening and the space on the side opposite to the opening communicate with each other is formed in the sensor holder 271. The sensor holder portion 270 is provided with a flexible cable 274 extended from the space on the side of the opening to the space on the side opposite to the opening via the interconnecting opening 276.

The water-tight/dust-tight double-sided tape 260 is made to adhere to the contact surface of the sensor holder 271 to surround the interconnecting opening 276. The water-tight/dust-tight double-sided tape 260 is made to adhere to the printed circuit board for sensor 258 on a surface opposite to the surface on which the mounting surface of the fingerprint sensor device 252 is mounted.

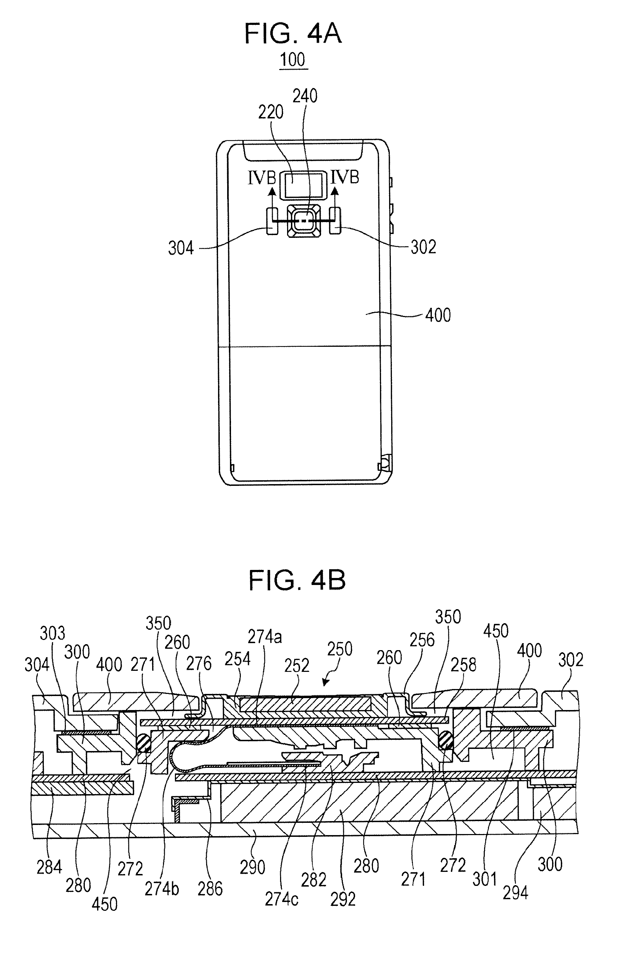

Next, a water-tight/dust-tight structure of the mobile phone 100 will be described. FIG. 4A is a rear view of the mobile phone. FIG. 4B is an IVB-IVB sectional view of the mobile phone illustrated in FIG. 4A. As illustrated in FIG. 4A, FIG. 4B is a sectional view of an area in which the fingerprint sensor module 240 of the mobile phone 100 is included.

As illustrated in FIG. 4B, a flexible board 280 is supported by holders 284 and 286 in the housing of the mobile phone 100. A wiring pattern which transmits electrical signals transmitted to and received from the fingerprint sensor device 252 is formed on the flexible board 280. On the flexible board 280, a connector 282 for the connection with the flexible cable 274 is provided. A main board 290 having a wiring pattern formed thereon for transmitting electrical signals transmitted and received between components for the implementation of various functions of the mobile phone 100 is provided in the housing of the mobile phone 100. On the main board 290, various components 292 and 294, such as large scale integration (LSI), resistance and capacitor, are mounted.

The flash lens 302 and the IrDA panel 304 are provided at the opening of the rear cover 400 and are exposed to the outside. The flash lens 302 is attached to the rear case 300 via a double-sided tape 301 in order to reduce entrance of liquid or dust from a gap between the rear cover 400 and the flash lens 302. The IrDA panel 304 is attached to the rear case 300 via a double-sided tape 303 in order to reduce entrance of liquid or dust from a gap between the rear cover 400 and the IrDA panel 304.

As illustrated in FIG. 4B, the sensor unit 250 which includes the fingerprint sensor device 252 is provided at the opening of the rear cover 400 and is exposed to the outside. In the housing of the mobile phone 100, the sensor holder 271 is fixed to the rear case 300 via the O-ring 272. Adhesion fixation of sensor holder 271 and the rear case 300 is carried out using the elasticity of O-ring 272. Inside the housing, a space defined by the rear cover 400 and the rear case 300 is divided into a space on the side of the opening 350 and a space on the side opposite to the opening 450. The space on the side of the opening 350 is located on the side of the opening of the rear cover 400.

The space on the side of the opening 350 is a space into which liquid or dust or other foreign material enter from, for example, a gap between the opening of the rear cover 400 and the sensor unit 250. The space on the side opposite to the opening 450 is a space into which no liquid or dust or other foreign material enter because the O-ring 272 functions as a packing material.

The interconnecting opening 276 which makes the space on the side of the opening 350 and the space on the side opposite to the opening 450 communicate with each other is formed in the sensor holder 271. The flexible cable 274 is extended to the space on the side opposite to the opening 450 from the space on the side of the opening 350 via the interconnecting opening 276.

For example, the flexible cable 274 is provided with a first terminal portion 274a and an extended portion 274b. The first terminal portion 274a is connected to the back surface of the printed circuit board for sensor 258 at a portion at which the through hole is formed. The extended portion 274b is extended from the first terminal portion 274a to the space on the side opposite to the opening 450 via the interconnecting opening 276. The flexible cable 274 includes a second terminal portion 274c which is connected to the connector 282 in the space on the side opposite to the opening 450 of the extended portion 274b. The electrical signals in accordance with the projections and indentations of the user's finger detected by the fingerprint sensor device 252 are output to the connector 282 via the through hole of the printed circuit board for sensor 258 and the flexible cable 274, and are transmitted to the flexible board 280 from the connector 282.

A water-tight/dust-tight structure which reduces entrance of liquid, dust or other foreign materials from the space on the side of the opening 350 to the space on the side opposite to the opening 450 via the interconnecting opening 276 is desired. In this regard, in the present embodiment, the water-tight/dust-tight double-sided tape 260 is a water-tight and dust-tight elastic film member formed in a frame shape. The water-tight/dust-tight double-sided tape 260 is adhesive on both sides of the film. The water-tight/dust-tight double-sided tape 260 surrounds the interconnecting opening 276 and is in contact with the contact surface of the sensor holder 271. The water-tight/dust-tight double-sided tape 260 is made to adhere to the printed circuit board for sensor 258 on the surface opposite to the surface on which the fingerprint sensor device 252 is mounted.

In this manner, the sensor unit 250 (i.e., the printed circuit board for sensor 258) and the sensor holder 271 are in close contact with each other via the film-shaped water-tight/dust-tight double-sided tape 260 surrounding the interconnecting opening 276. It is therefore possible to reduce entrance of liquid or dust or other foreign material from the space on the side of the opening 350 to the space on the side opposite to the opening 450 via the interconnecting opening 276. The water-tight/dust-tight structure achieved by the water-tight/dust-tight double-sided tape 260 of the present embodiment reduces in size and thickness of the mobile phone 100 while keeping water-tightness and dust-tightness of the mobile phone 100.

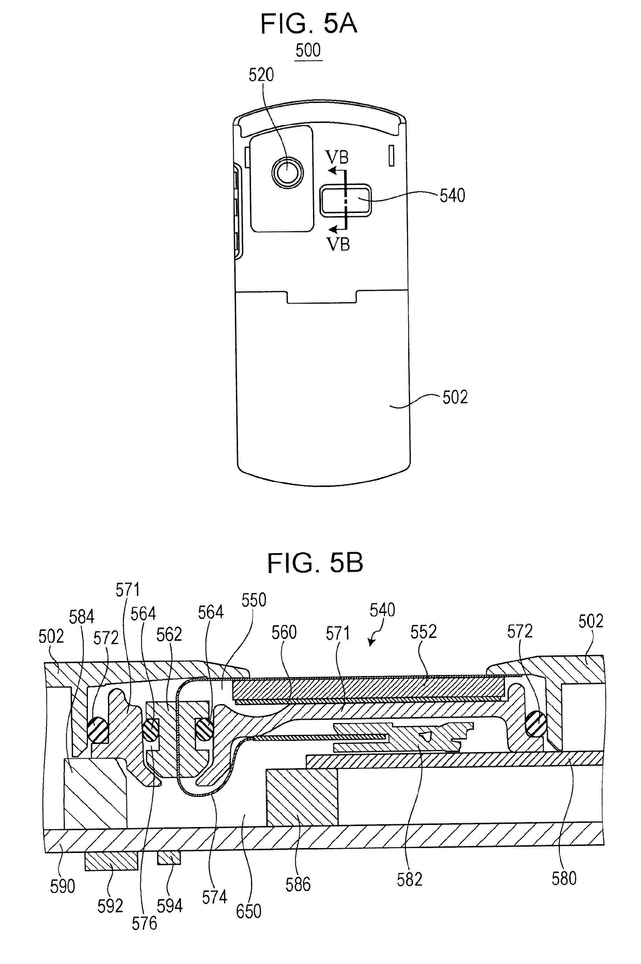

In this regard, description will be given with reference to a mobile phone for comparison. FIG. 5A is a rear view of a mobile phone for the comparison. FIG. 5B is a VB-VB sectional view of the mobile phone illustrated in FIG. 5A.

As illustrated in FIG. 5A, a mobile phone 500 for the comparison is provided with a fingerprint sensor module 540 which is provided at an opening formed in a rear case 502 and is exposed to the outside. The mobile phone 500 is provided with a camera module 520 which is provided at the opening formed in the rear case 502 and is exposed to the outside. As illustrated in FIG. 5A, the sectional view of FIG. 5B is a sectional view of an area near the fingerprint sensor module 540 of the mobile phone 500. The mobile phone 500 is described for the comparison with the water-tight/dust-tight structure of the mobile phone 100 of the present embodiment: therefore, description of other components than those regarding the cross section of the fingerprint sensor module 540 is omitted.

As illustrated in FIG. 5B, the fingerprint sensor module 540 is provided with a sensor unit 552, a water-tight/dust-tight double-sided tape 560, a sensor holder 571 and an O-ring 572. The fingerprint sensor module 540 is provided with a flexible cable 574, a grommet 562 and an O-ring 564.

The sensor unit 552 is provided at the opening of the rear case 502 and is exposed to the outside. The sensor unit 552 is provided with a fingerprint sensor device which outputs electrical signals in accordance with projections and indentations of the user's finger. The water-tight/dust-tight double-sided tape 560 is a film-shaped elastic member which is water-tight and dust-tight, and has adhesiveness on both sides of a film-shaped portion. The sensor unit 552 and the sensor holder 571 are in close contact with each other via the water-tight/dust-tight double-sided tape 560.

As illustrated in FIG. 5B, a flexible board 580 is supported by the holder 586 in the housing of the mobile phone 500. On the flexible board 580, a wiring pattern is formed which transmits electrical signals transmitted to and received from the sensor unit 552. On the flexible board 580, a connector 582 is provided for the connection with the flexible cable 574. A main board 590 is provided in the housing of the mobile phone 100. On the main board 590, a wiring pattern is formed which transmits electrical signals transmitted and received between components in order to carry out various functions of the mobile phone 500. On the main board 590, various components 592, 594, such as LSI, resistance and a capacitor, are mounted.

The sensor holder 571 is fixed to the rear case 502 via the O-ring 572 in the housing of the mobile phone 500. A part of the sensor holder 571 is supported by the holder 584 which is supported by the main board 590. A space in the housing of the mobile phone 500 is divided into a space on the side of the opening 550, which is located on the side of the opening of the rear case 502, and a space on the side opposite to the opening 650 by closely fixing the sensor holder 571 and the rear case 502 to each other by the elasticity of the O-ring 572.

An interconnecting opening 576 which makes the space on the side of the opening 550 and the space on the side opposite to the opening 650 communicate with each other is formed in the sensor holder 571. One end of the flexible cable 574 is connected to a surface on which the sensor unit 552 is exposed to the outside, i.e., a surface of the rear case 502 on the side of the opening, and is extended to the space on the side opposite to the opening 650 via the interconnecting opening 576. The other end of the flexible cab le 574 is connected to the connector 582.

A water-tight/dust-tight structure which reduces entrance of liquid, dust or other foreign materials from the space on the side of the opening 550 to the space on the side opposite to the opening 650 via the interconnecting opening 576 is desired. In this regard, in the mobile phone 500 for the comparison, the grommet 562 may be provided to closely cover the periphery of the extended portion at the position at which the grommet 562 passes through the interconnecting opening 576 of the extended portion the flexible cable 574. The O-ring 564 is provided to surround the periphery of the grommet 562. At the interconnecting opening 576, entrance of liquid or dust or other foreign material through the interconnecting opening 576 may be reduced by making the grommet 562 be closely fixed to an inner surface of the interconnecting opening 576 via the O-ring 564.

Such a water-tight/dust-tight structure has a limit in reduction in size of the grommet 562 since the grommet 562 is fabricated by molding and it is desired to keep a space in which the O-ring 564 is disposed in addition to the space in which the O-ring 572 is disposed. Therefore, such a water-tight/dust-tight structure may have limit in reduction in size and in thickness of the mobile phone 500.

In contrast, the water-tight/dust-tight structure of the present embodiment includes providing the water-tight/dust-tight double-sided tape 260 which is a water-tight and dust-tight elastic film member formed in a frame shape so that the periphery of the interconnecting opening 276 is surrounded, and the sensor holder 271 and the sensor unit 250 are made to be in close contact with each other. This configuration achieves water-tightness and dust-tightness using no grommet 562 or O-ring 564. Since the water-tight/dust-tight double-sided tape 260 is sufficiently smaller than the grommet 562 in thickness, the thickness of the mobile phone 100 may be reduced while keeping the mobile phone 100 water-tight and dust-tight. Further, absence of the grommet 562 and the O-ring 564 may reduce the size of the mobile phone 100.

## Claims

1. An electronic equipment comprising:
a housing in which an opening is formed;
an electronic device unit in which an electronic device is provided at the opening of the housing;
a device holder which is provided with a first sealing member around a periphery of the device holder, the device holder being provided in the housing or in a fixing unit fixed to the housing via the first sealing member;
a second sealing member which is provided between the electronic device unit and the device holder and is provided to surround an interconnecting opening formed in the device holder; and
a conductive member which is connected to other components from the electronic device unit through the interconnecting opening to enable transmitting or receiving of an electrical signal between the electronic device and other components.

2. The electronic equipment according to claim 1, wherein the electronic device unit includes a printed circuit board on which the electronic device is mounted, and the second sealing member made with a double-sided tape is applied to between the device holder on a surface of the electronic device and the printed circuit board on a surface opposite to the surface on which the electronic device is mounted.

3. The electronic equipment according to claim 2, wherein the printed circuit board includes a through hole which an electrical signal transmitted or received between the electronic device and other components is conducted in between a surface of the printed circuit board mounting the electronic device and a surface opposite to the surface of the printed circuit mounting the electronic device, and the conductive member includes a first terminal portion connected to a portion at which the through hole is formed in the printed circuit board on the surface opposite to the surface on which the electronic device is mounted and a second terminal portion connected to the other components
